# EUROPEAN PATENT SPECIFICATION

(11) **EP 1 563 007 B1**
(45) Date of publication and mention of the grant of the patent: **28.03.2007**
(21) Application number: 03778107.7
(22) Date of filing: 31.10.2003
(51) Int. Cl.: C08L 23/02

(54) **POLYMERIC PIPES AND LINERS MADE FROM BLENDS OF POLYOLEFINS AND POLYAMIDES**
AUS MISCHUNGEN VON POLYOLEFIN UND POLYAMID HERGESTELLTE POLYMERROHRE ODER POLYMERLINER
TUBES ET DOUBLAGES POLYMERIQUES FAITS DE MELANGES DE POLYOLEFINES ET DE POLYAMIDES

(30) Priority: 31.10.2002 US 422815 P
(43) Date of publication of application: 17.08.2005
(73) Proprietor: E.I. DU PONT DE NEMOURS AND COMPANY, Wilmington, DE 19898 (US)
(72) Inventor: MESTEMACHER, Steven, A., Parkersburg, WV 26104 (US)
(74) Representative: Morf, Jan Stefan
(86) International application number: PCT/US2003/035173
(87) International publication number: WO 2004/039882

(56) References cited:
- EP-A- 0 274 424
- EP-A- 1 152 181
- WO-A-91/05008
- US-A- 4 444 817

## Description

### Field of the Invention

This invention relates to pipes and liners for use in the oil and gas industry. More particularly, this invention relates to such pipes and liners that comprise a melt-mixed blend of polyolefin, polyamide, and compatibilizing agent that provides an enhanced barrier to the permeation of hydrocarbons.

### Background of the Invention

The nature of the oil and gas industry is such that a wide variety of materials, including solids, liquids, and gases need to be transported through different sorts of pipes under a wide variety of conditions. One feature that all these pipes share is that they must be made from materials that are impermeable and resistant to the substances being transported. Such substances can include not only hydrocarbons, but water and salt water.

For example, drilled oil wells are typically lined with steel casings. The steel is susceptible to erosion and corrosion, however, and, as a result, these pipes have been lined with plastic liners in both onshore and offshore pipelines. The casing liner must be capable of withstanding temperatures and pressures typically encountered in oil and gas wells, and must have compression and memory properties that allow it to be downsized for insertion into the casing and subsequently permit it to expand to form a fluid tight seal against the casing. Polyethylene pipe is considered to be the preferred material for the fabrication of the casing. In addition to its good compression and memory properties, polyethylene pipe is resistant to abrasion, which enables it to withstand the passage of down-hole tools, and resistant to salt water and some chemical corrosion. Furthermore, polyethylene pipe can be formed into a long, continuous tube containing no joint connections. This is important in that many casing leaks occur in or near the connection between one segment of casing and another. However, for high temperature and aggressive chemical environments, nylon 11 is often used. Performance is much improved, but the cost is such that nylon 11 is only considered for highly demanding applications.

A method for lining steel casings used in well-drilling operations, preferably with polyethylene, for purposes of corrosion protection has been disclosed in Vloedman, U.S. Patent 5,454,419. A procedure is described for reducing a continuous string of polyethylene pipe in diameter and then running it into a casing-lined well bore in such a manner that the polyethylene pipe remains in a reduced state until the polyethylene pipe reaches a preselected depth. After the polyethylene pipe is run to the desired depth, the reduced pipe is allowed to rebound, thereby forming a fluid-tight seal with the casing and effectively sealing any breaches in the casing.

While the method disclosed in US Patent 5,454,419 patent has successfully met the need for repairing breaches in casings in an effective and time efficient manner, several inefficiencies have nevertheless been encountered, particularly in circumstances when only a selected segment of the casing is in need of repair. If only a relatively short section of approximately 100 to 2000 feet of casing is in need of repair and this section is located several thousand feet below the surface, for example, it is more cost effective if the casing does not have to be lined entirely from the surface to the pertinent section, and US Patent 6,283,211, also by Vloedman, discloses a method of repairing portions of a pipe.

In other known liner systems, the liner resides in close-tolerance with the host pipe along its length, forming a stable composite system. The installed liner may be either loose-fit or compressed-fit. In all but low pressure applications, the stresses induced by fluid pressure from within the liner are transmitted to the surrounding host tubular and the host tubular resists these transmitted stresses. As hydrocarbon fluids permeate through the liner, there is a resulting build up of pressure in the annulus (the space between the liner and the inside surface of the host pipe) which can directly result in corrosion, leakage and/or liner collapse if the pressure inside the pipe drops below that of the annulus. All are major deficiencies. Where the liner outer surface maintains a significant degree of contact with the inner host wall there is a significant degree of sealing. The annular cross sectional area is thus reduced to the extent that only an extremely tortuous path for the annular fluid's migration toward any venting mechanism along the system exists.

Taylor, U.S. Patent 6,220.079, addresses this problem by disclosing a method of decreasing the negative effects of pressure in the annulus by modification of the liner configuration from its usual uniform cylindrical shape to include the incorporation of multiple conduits between the liner and the host tubular. These conduits provide a relatively inexpensive means for venting the pressure, which can help prevent liner collapse, and also permit the introduction of instruments for making measurements.

Other contributors to the onset of liner collapse include the liner's mechanical properties, the nature of the fluid transported, pressure, temperature, and the effective rate of fluid permeation. The present invention discloses a method of addressing liner collapse by significantly decreasing the rate of fluid permeation through the liner.

U. S. Patent 4,444,817 discloses laminar articles of polyolefin and a condensation polymer. Despite a wide range of specific articles being claimed, there was absolutely no consideration, mention, or suggestion of utilizing this material for applications in the field of oil and gas exploration and/or production.
US 4,444,817 discloses an article comprising a polyolefin, a polyamide and maleic anhydride modified polyolefin. The polyamide is characterized by a melting temperature of 215 C is present In the composition as the discontinuous phase and as layers with a thickness of 0.5-50 micrometers. WP9105008 discloses a composition comprising a polyolefin, a polyamide and a maleic anhydride mofified polyolefin.

It is an object of the present invention to provide pipes and liners with good permeation resistance to hydrocarbons. A feature of the present invention is to melt blend at least one polyolefin, at least one polyamide, and at least one compatibilizing agent In the process of forming the pipes and liners, It is an advantage of the present invention to provide pipes and liners comprising a low-cost polymeric material that has enhanced barrier properties relative to polyethylene. These and other objects, features, and advantages will become better understood upon having reference to the detailed description herein.

### Summary of the Invention

There is disclosed and claimed herein pipes and liners suitable for use in transporting substances in oil and gas applications, comprising a melt-mixed blend of:
(a) at least one polyolefin;
(b) at least one polyamide incompatible with said at least one polyolefin (a); and
(c) at least one alkylcarboxyl-substituted polyolefinic compatibilizer; wherein said polyolefins (a) are in a continuous matrix phase and said polyamides (b) are present in a discontinuous distributed phase in the form of a multitude of thin, substantially parallel, and overlapping layers of material embedded in the continuous phase, and further wherein at least a portion of said compatibilizer (c) is present between said layers and promotes adhesion therebetween.

### Detailed Description of the Invention

As used herein, the term "pipe" refers to a hollow, elongated, often cylindrical conduit that is typically used to contain substances that can include fluids, hydrocarbon effluent, finely divided solids, or gases during transport. By "oil and gas applications" is meant uses in the oil and gas industry that involve the removal of fossil fuels such as crude oil and natural gas from the earth and their subsequent transport and refinement. Such applications include, but are not limited to, tubing, casing, siphon strings, line pipe, and facility piping. The term "liner" is used here to identify a second layer that is used inside of a steel or other metal pipe, for protection, thus creating a "lined pipe" that is typically a multi-pieced construction of pipe. The term "line pipe" is distinct from a "lined pipe", and is the flow line between wellhead, vessels, pumps, storage facilities, and/or processing facilities. The term "tubular" is used in the oil and gas industry to refer to round pipes used in a variety of applications, including, but not limited to tubing, casing, siphon strings, line pipes, and facility piping.

As used herein when referring to a polymer, the term "particle" refers to the physical form of the bulk polymer and can be a pellet, cube, flake, powder, or other form known to those skilled in the art.

For the purposes of this invention, "incompatible polymers" mean polymeric materials that have substantially no mutual miscibility in the melt form.

As used herein, when the word "about" prefaces a numerical range, it is intended to apply to both the lower and upper limit.

The pipe or liner of this invention comprises a polymeric composition that comprises a melt-mixed blend of at least one polyolefin, at least one polyamide that is incompatible with the one or more polyolefins, and at least one polymeric compatibilizing agent that serves to adhere together domains of the incompatible polymers, such that the polyamide portion exists in a discontinuous phase that is distributed in the polyolefin continuous phase. The discontinuous polyamide phase exists in a laminar configuration, meaning that it comprises a multitude of domains in the form of thin, substantially parallel, and overlapping layers of material that are embedded in the continuous polyolefin phase. The presence of these domains improves the barrier properties of the unmodified polyolefin by creating an extended maze through which hydrocarbons or other substances must pass if they are to permeate or diffuse through the wall of the pipe or liner. The composition is made by mixing together particles of the polymers, heating the mixture to yield a heterogeneous melt of material, and forming the melt in a way that results in stretching the melt to yield an elongated discontinuous phase.

The presence of the laminar configuration of the discontinuous polyamide phase means that smaller amounts of polyamide are required to achieve a given degree of permeation resistance than would be obtained from a homogeneous blend. Homogeneous well-mixed blends are only partially effective until large quantities (e.g. >50%) of polyamide are present, which then becomes cost prohibitive for these applications. Coextrusion construction of liners, etc. would require additional investment for additional extruders for each polymer type as well as some sort of "adhesive layer" to bind the incompatible materials. The current invention bypasses these traditional and more costly approaches by using a single step extrusion in a manner that allows for significantly reduced amounts of polyamide.

The pipes and liners of the present invention have reduced permeability to hydrocarbons relative to polyolefin pipes and liners. An advantage of using the liners of the present invention to line metal pipes used in the oil and gas industry is that the likelihood of system failure due to liner collapse is reduced. This collapse is most often triggered by the accumulation in the annulus of fluids that have permeated or diffused through the liner from the materials being transported by or stored in the pipe. Such fluids may exist in either gas or liquid phase depending upon conditions in the annulus. For the most part, an equilibrium is in effect; the fluid pressure within the pipe is generally greater than or equal to the annular pressure. However, in the course of normal operations, the pressure within the pipe may be reduced to substantially less than the annular fluid pressure, such as in an unplanned shutdown. The resulting pressure differential may allow an expansion of the annular fluid to occur as the pressures attempt to equalize. If the liner is unable to withstand the external stress on its own, radial buckling can result.

In one embodiment, the polymer particles, in unmelted form, are mixed thoroughly so as to provide a statistically homogeneous distribution and care must be exercised to avoid substantial additional mixing after the polymers have been heated to a melt. In another embodiment, the polymer particles can be combined in softened or molten form so long as the combination of polymers maintains a heterogeneous character. Combining the polymers at a temperature such that one of the polyolefin or the polyamide is not softened or molten and then heating the combination can also establish the blend. It is preferable that a melted heterogeneous blend of incompatible polymers be established so that, when the melt is stretched, such as by extrusion forces, the polyolefin is in the form of a continuous matrix phase and the polyamide is in the form of a discontinuous distributed phase. The discontinuous phase is present as a multitude of thin, substantially parallel and overlapping layers embedded in the continuous phase.

The polyamide and compatibilizer may also be melt-mixed (using any method known to those skilled in the art, such as compounding) prior to mixing with the polyolefin component. Thus, for example, melt-blended particles comprising polyamide and compatibilizer may be mixed with polyolefin particles as described.

It is believed that at least some of the polymeric compatibilizer is concentrated between adjacent layers of incompatible polymer and is joined partially with one layer and partially with an adjacent layer, thus adhering the layers together. Without the compatibilizer, pipes and liners formed from heterogeneous melts of incompatible polymer have poor mechanical properties and, generally, cannot even be easy formed by extrusion or molding as unitary articles.

Although it is not required, it is preferred that the polyamide used in the practice of this invention be, as stated, in particulate form; and it is desired that both the polyolefin and the polyamide should be mixed as particles. The particles should, as a general rule, be of a size such that the molten blend of incompatible polymers, when introduced to some melt stretching means, such as extrusion die lips, exhibits the heterogeneity preferred for the practice of the invention. When the particles, especially particles of the polyamide, are of too small a size, the melted blend, even though not excessively mixed, tends to function as a homogeneous composition because the domains of material making up the discontinuous polymer phase are so small. When the particles, especially particles of the polyamide, are of too large a size, the melted blend tends to form into pipes and liners having a marbleized structure rather than a laminar structure, the large domains of the materials that would make up the discontinuous phase extending to opposite boundaries of the pipe or liner and causing disruption of the material that would make up the continuous phase. The particles are preferably generally regular in shape, such as cubical or spherical or the like. The particles may, however, be irregular; and they may have one dimension substantially greater than another dimension such as would be the case, for example, when flakes of material are used.

When each of the incompatible polymers is present as individual particles, the particles are generally of approximately the same size although such is not required. The compatibilizer can be provided by itself as individual particles or it can be mixed into, coated onto, or otherwise combined with one or both of the incompatible polymers.

The thickness of the layers of material in the discontinuous phase is a function of the particle size combined with the degree of stretching in the forming step. The particle size of the polyamide is generally selected with a view toward resulting, after stretching, in overlapping layers which can be from about 0.5 to 50 micrometers thick and, perhaps, sometimes slightly thicker.

Mixing particles of polymers can be accomplished by any of the means known to those skilled in the art, such as by means of a blender or a tumble mixer or, on a larger scale, by means of a double-cone blender. Continuous mixing of the particles can be accomplished by any of several well-known methods. Of course, the particles can also be mixed by hand with the only requirement of the mixing being that any two statistical samplings of the mixture in a given mass of material should yield substantially the same composition. The mixing of the incompatible polymers can be accomplished by adding particles of the higher melting polymer to a melt of the lower melting polymer maintained at a temperature below the higher melting point. In that case, the melt is agitated to obtain an adequate mixture; and the mixture is thus ready for the heating step.

Once mixed, the incompatible polymers are heated to a temperature greater than the melting point of the highest melting polymer component. It is noted that the heating is conducted for the purpose of stretching the softened or melted blend. In the case of an incompatible polymer that exhibits no well-defined melting temperature, "melting temperature", as used here, refers to a temperature at least high enough that the polymers have been softened to the degree required to stretch each of the polymers in the blend. That heating results in a softened or melted heterogeneous blend of materials and the heating must be conducted in a manner that avoids substantial additional mixing of the incompatible polymers because such mixing could cause a homogenization and combination of the melted particles and could result in a melt and a pipe or liner of homogeneous, unlayered, composition. The heating can be conducted by any of several means well-known to those skilled in the art and is usually conducted in an extruder. It has been learned, that a single-screw extruder of the type that is designed for material transport and not material mixing can be used between the heating and forming steps of this invention without causing homogenization of the two phase incompatible polymer composition. Low shear and low mixing extruders of the kind normally used for polyvinyl chloride, acrylonitrile, or polyvinylidene chloride can be used to practice this invention if they are used in a way to melt and transport the materials and minimize mixing of the components. High shear and high mixing extruders of the kind normally used for nylon and polyethylene are less desirable to practice this invention. Numerous other low shear melt blending devices, as known to those skilled in the art, can be used without departing from the spirit of the invention. To the extent that the composition retains an aspect of heterogeneity, the process and the product of this invention can be realized.

The process of forming the pipes and liners of the invention requires stretching of the melted blend followed by cooling. Stretching is an elongation of the two-phase melt to cause a substantial change in the dimensions of the domains in the discontinuous phase. Stretching can be accomplished by any of several means, or by a combination of more than one such means. For example, the melt can be extruded or coextruded between die lips. The stretching can be accomplished by a slight drawing following the extrusion or coextrusion of the blend of the heterogeneous melt.

The stretching can be in one direction or in perpendicular directions. Whether the stretching is conducted in one direction or two, there should be an elongation of from about 100 to 500 percent in at least one direction; and an elongation of from about 100 to 300 percent is preferred. While the upper limit set out herein is not critical, the lower limit is critical insofar as inadequate stretching does not yield the improved barriers to fluid permeation which characterize this invention. Avoidance of excessive stretching is important only insofar as excessive elongation of the melt may lead to weakening or rupture of the article.

Stretching is followed by cooling to below the temperature of the melting point of the lowest melting component to solidify the extruded part. The cooling can be conducted by any desired means and at any convenient rate.

The one or more polyamides of the composition used in this invention are present in about 2 to 40 or preferably about 3 to 20 or more preferably about 5 to 15 weight percent based on the total amount of polyamide, compatibilizer, and polyolefin in the composition. The one or more compatibilizing agents of the composition used in this invention are present in about 0.25 to 12 or preferably about 0.25 to 6 or more preferably about 0.5 to 4 weight percent based on the total amount of polyamide, compatibilizer, and polyolefin in the composition. The one or more polyolefins of the composition used in this invention are present in about 60 to 97 or preferably about 80 to 97 or more preferably about 85 to 95 weight percent based on the total amount of polyamide, compatibilizer, and polyolefin in the composition.

Any of the components can be used to introduce inert fillers into the composition provided only that the fillers are not of a kind or in an amount that would interfere with formation of the layered construction or with the desired or required properties of the composition. Amounts of plasticizers, opacifiers, colorants, lubricating agents, heat stabilizers, oxidation stabilizers, and the like that are ordinarily used in structural polymeric materials can be used herein. The amount of such filler is not included in the calculation of amounts of incompatible polymers and compatibilizers.

The polyolefins used in the composition of the invention include polyethylene, polypropylene, polybutylene, copolymers of those materials, and the like. Polyethylene is preferred and may be high, medium, or low density.

The polyolefin may also be cross-linked during or after the formation of the pipes of the present invention using any method known to those skilled in the art. For example, if cross-linking is to occur during the formation of the pipes and liners, a cross-linking agent such as a peroxide may be added to the mixture of polymer particles that is used to form the pipes and liners. The peroxide may be added in the form of a masterbatch in the polyamide and/or polyolefin. The peroxide may also be incorporated into the polyamide and/or polyolefin particles in a previous step, such as a melt-compounding or other melt-mixing step. After the formation of the pipes and liners, the polyolefin component may also be cross-linked by irradiating the pipes and liners. Alternatively the polyolefin component may be cross-linked using a silane cross-linking agent such as vinyltrimethoxysilane as will be understood by those skilled in the art. When silane cross-linking agents are used, they and any necessary catalysts and initiators may be added to the molten blend during the formation of the pipes and liners. In such a case, it is preferred that the polyamide and compatibilizer be melt-blended prior to mixing with the polyolefin. Silane cross-linking agents may also be grafted to the polyolefin prior to the use of the polyolefin in the formation of the pipes and liners of the present invention. The polyolefins in pipes and liners containing cross-linking agents may be cross-linked using methods known to those skilled in the art, such as by treating pipes and liners with water or steam that is at least about 80 °C. Pipes and liners comprising cross-linked polyethylene are preferred.

When used herein, the term "polyamides" refers to both homopolymers and copolymers. Polyamides are well known and are made by reacting carboxylic acids or their reactive equivalents with primary amines and/or lactams under well-known conditions. Lactams and aminoacids may also be reacted to yield polyamides. Examples of carboxylic acids used in polyamide preparation are adipic acid, suberic acid, sebacic acid, azelaic acid, malonic acid, glutaric acid, pimelic acid, isophthalic acid, terephthalic acid, and the like. Examples of primary diamines are tetramethylenediamine, pentamethylenediamine, hexamethylenediamine, octamethylenediamine, and the like. Exemplary polyamides include poly(pentamethylene adipamide), poly(hexamethylene adipamide), poly(hexamethylene sebacamide); polyamides obtained from lactams such as caprolactams and from amino acids such as 11-aminoundecanoic acid, and the like. Copolyamides are also suitable. Preferred polyamides and copolyamides each have melting points in the range of 150 °C to 250 °C and even more preferred in the range of 180 °C to 225 °C, and include such polymers as polycaproamide, poly(11-aminoundecanoamide), polydodecanoamide, poly(hexamethylene sebacamide), poly(hexamethylene dodecanoamide), and copolymers of poly(hexamethylene adipamide) with polycaproamide. Also preferred are amorphous polyamide copolymers that do not have clearly-defined melting points, but which are derived in part from aromatic monomers such as isophthalic acid.

The polyamides used in the composition used in the present invention should be melt extrudable, and preferably have a number average molecular weight of at least 5000. Examples of polyamides include those made by condensation of equimolar amounts of at least one saturated dicarboxylic acid containing 4 to 14 carbon atoms with at least one diamine containing 4 to 14 carbon atoms. Excess diamine, however can be used to provide an excess of amine end groups over carboxyl end groups in the polyamide. Specific examples include polyhexamethylene adipamide (66 nylon), polyhexamethylene azelaamide (69 nylon), polyhexamethylene sebacamide (610 nylon), polyhexamethylene dodecanoamide (612 nylon), polycaprolactam (6 nylon), and their copolymers. Semi-aromatic polyamides that are melt extrudable can also be used in the melt-mixed blends of the present invention.

It is preferred that the polyamide have a higher melt viscosity than the polyolefin at the temperature at which the pipes and liners of the present invention are formed.

The compatibilizer used in the composition used in this invention is an alkylcarboxyl-substituted polyolefin, which is a polyolefin that has carboxylic moieties attached thereto, either on the polyolefin backbone itself or on side chains. By "carboxylic moiety" is meant carboxylic groups from the group consisting of acids, esters, anhydrides, and salts. Carboxylic salts are neutralized carboxylic acids and a compatibilizer, which includes carboxylic salts as a carboxylic moiety also, includes the carboxylic acid of that salt. Such compatibilizers are termed ionomeric polymers.

Compatibilizers can be prepared by direct synthesis or by grafting. An example of direct synthesis is the polymerization of an α-olefin with an olefinic monomer having a carboxylic moiety; and an example of grafting is the addition of a monomer having a carboxylic moiety to a polyolefin backbone. In the compatibilizer made by grafting, the polyolefin is polyethylene or a copolymer of ethylene and at least one α-olefin of 3-8 carbon atoms such as propylene, and the like, or a copolymer including at least one α-olefin of 3-8 carbon atoms and a diolefin, such as 1,4-hexadiene, and the like. The polyolefin is reacted with an unsaturated carboxylic acid, anhydride, or ester monomer to obtain the grafted polymer. Representative eligible acids, anhydrides, and esters include: methacrylic acid; acrylic acid; ethacrylic acid; glycidyl methacrylate; 2-hydroxy ethylacrylate; 2-hydroxy ethyl methacrylate; diethyl maleate; monoethyl maleate; di-n-butyl maleate; maleic anhydride; maleic acid; fumaric acid; itaconic acid; monoesters of such dicarboxylic acids; dodecenyl succinic anhydride; 5-norbornene-2,3-anhydride; nadic anhydride (3,6-endomethylene-1,2,3,6-tetrahydrophthalic anhydride); and the like. Generally, the graft polymer will have from about 0.01 to 20, preferably about 0.1 to 10, and most preferably about 0.2 to 5, weight percent graft monomer. Grafted polymers are described in greater detail in U.S. Pat. Nos. 4,026,967 and 3,953,655.

In the compatibilizer made by direct synthesis, the polymeric material is a copolymer of an α-olefin of 2-10 carbon atoms and an α-ethylenically unsaturated carboxylic acid, ester, anhydride, or salt having 1 or 2 carboxylic moieties. The directly synthesized compatibilizer is made up of at least 75 mole percent of the olefin component and from about 0.2 to 25 mole percent of the carboxylic component.

lonomeric compatibilizer is preferably made from directly synthesized compatibilizer and is preferably made up of about 90 to 99 mol percent olefin and about 1 to 10 mol percent α-ethylenically unsaturated monomer having carboxylic moieties wherein the moieties are considered as acid equivalents and are neutralized with metal ions having valences of 1 to 3, inclusive, where the carboxylic acid equivalent is monocarboxylic and are neutralized with metal ions having a valence of 1 where the carboxylic acid equivalent is dicarboxylic. To control the degree of neutralization, metal ions are present in an amount sufficient to neutralize at least 10 percent of the carboxyl moieties. Representative eligible α-olefins and unsaturated carboxylic acid, anhydride, and ester monomers are those previously herein described. Ionomeric polymers are described in greater detail in U.S. Pat. No. 3,264,272.

Preferred compatibilizers are polyolefins grafted with a dicarboxylic acid or dicarboxylic acid derivative such as an anhydride or ester or diester.

The pipes and liners of the present invention have uses that include, but are not limited to, line pipes, flexible pipes, down-hole casing, down-hole casing liners, distribution piping, sucker rods, siphon strings, horizontal piping, horizontal pipe lining, hydraulic hoses, flexible pipes, and pressurized hoses.

## Claims

1. The use for transporting oil or gas of pipes and liners comprising a melt-mixed blend of:
(a) at least one polyolefin;
(b) at least one polyamide incompatible with said at least one polyolefin (a); and
(c) at least one alkylcarboxyl-substituted polyolefinic compatibilizer,
wherein said polyolefins (a) are in a continuous matrix phase and said polyamides (b) are present in a discontinuous distributed phase in the form of a multitude of thin, substantially parallel, and overlapping layers of material embedded in the continuous phase, and further wherein at least a portion of said compatibilizer (c) is present between said layers and promotes adhesion therebetween.

2. The use as claimed in claim 1 wherein the at least one polyolefin is selected from the group consisting of polyethylene, polypropylene, polybutylene, and copolymers of those materials.

3. The use as claimed in claim 1 wherein the at least one alkylcarboxyl-substituted polyolefinic compatibilizer is selected from the group consisting of polyolefins that have carboxylic moieties attached thereto, either on the polyolefin backbone itself or on side chains.

4. The use as claimed in claim 1 wherein the at least one polyamide is selected from the group consisting of polycaproamide, poly(11-aminoundecanoamide), polydodecanoamide, poly(hexamethylene sebacamide), poly(hexamethylene dodecanoamide), and copolymers of poly(hexamethylene adipamide) with polycaproamide.

5. The use as claimed in claim 1 wherein the at least one polyamide further comprises amorphous polyamide copolymers derived in part from aromatic monomers.

6. The use as claimed in claim 1 wherein the discontinuous distributed phase is present in layers of material more than 0.5 micrometers and less than 50 micrometers thick.

7. The use as claimed in claim 1 wherein the melt-mixed blend further comprises at least one plasticizer.

8. The use as claimed in claim 1 wherein the melt-mixed blend further comprises at least one lubricating agent.

9. The use as claimed in claim 1 wherein the melt-mixed blend further comprises at least one stabilizer.

10. The use as claimed in claim 1 wherein the at least one polyamide each has a melting point in the range of 150 °C to 250 °C.

11. The use as claimed in claim 1 wherein the at least one polyamide each has a melting point in the range of 180 °C to 225 °C.

12. The use as claimed in claim 1 wherein the at least one polyamide is present in 2 to 40 weight percent, the at least one polyolefin is present in 60 to 97 weight percent, and the at least one alkylcarboxyl-subsituted polyolefinic compatibilizing agent is present in 0.25 to 12 weight percent, where all weight percents are based on the total amount of polyamide, polyolefin, and alkylcarboxyl-subsituted polyolefinic compatibilizing agent.

13. The use as claimed in claim 1 wherein the at least one alkylcarboxyl-substituted polyolefinic compatibilizer is each prepared by grafting a dicarboxylic acid or dicarboxylic acid derivative such as an anhydride, ester, or diester to a polyolefin.

14. The use as claimed in claim 1 **characterized in that** the pipe or liner is a flexible pipe.

15. The use as claimed in claim 1 **characterized in that** the pipe or liner is a line pipe.

16. The use as claimed in claim 1 **characterized in that** the pipe or liner is a down-hole casing liner.

## Patentansprüche

1. Verwendung, für das Transportieren von Öl oder Gas, von Rohren oder Linern umfassend eine schmelzgemischte Mischung von:
(a) mindestens einem Polyolefin;
(b) mindestens einem Polyamid, das mit dem mindestens einen Polyolefin (a) unverträglich ist; und
(c) mindestens einem alkylcarboxylsubstituierten polyolefinischen Verträglichmacher;
wobei die Polyolefine (a) in einer kontinuierlichen Matrixphase vorliegen und die Polyamide (b) in einer diskontinuierlichen verteilten Phase in Form mehrerer dünner, im Wesentlichen paralleler, sich überlappender Schichten von Material vorliegen, die in der kontinuierlichen Phase eingebettet sind, und wobei des Weiteren mindestens ein Teil des Verträglichmachers (c) zwischen den Schichten vorliegt und die Haftung dazwischen fördert.

2. Verwendung nach Anspruch 1, wobei das mindestens eine Polyolefin aus der Gruppe ausgewählt ist bestehend aus Polyethylen, Polypropylen, Polybutylen und Copolymeren dieser Materialien.

3. Verwendung nach Anspruch 1, wobei der mindestens eine alkylcarboxylsubstituierte polyolefinische Verträglichmacher aus der Gruppe ausgewählt ist bestehend aus Polyolefinen, an die Carboxylanteile angebracht sind, und zwar entweder an der Polyolefinrückgradkette selbst oder an den Seitenketten.

4. Verwendung nach Anspruch 1, wobei das mindestens eine Polyamid aus der Gruppe ausgewählt ist bestehend aus Polycaproamid, Poly(11-aminoundecanamid), Polydodecanamid, Poly(hexamethylensebacamid), Poly(hexamethylendodecanamid) und Copolymeren von Poly(hexamethylenadipamid) mit Polycaproamid.

5. Verwendung nach Anspruch 1, wobei das mindestens eine Polyamid der Weiteren amorphe Polyamidcopolymere umfasst, die teilweise von aromatischen Monomeren deriviert sind.

6. Verwendung nach Anspruch 1, wobei die diskontinuierliche verteilte Phase in Schichten von Material einer Dicke von mehr als 0,5 Mikrometern und weniger als 50 Mikrometern vorliegt.

7. Verwendung nach Anspruch 1, wobei die schmelzgemischte Mischung des Weiteren mindestens einen Weichmacher umfasst.

8. Verwendung nach Anspruch 1, wobei die schmelzgemischte Mischung des Weiteren mindestens ein Gleitmittel umfasst.

9. Verwendung nach Anspruch 1, wobei die schmelzgemischte Mischung des Weiteren mindestens einen Stabilisator umfasst

10. Verwendung nach Anspruch 1, wobei das mindestens eine Polyamid jeweils einen Schmelzpunkt im Bereich von 150 °C bis 250 °C aufweist.

11. Verwendung nach Anspruch 1, wobei das mindestens eine Polyamid jeweils einen Schmelzpunkt im Bereich von 180 °C bis 225 °C aufweist.

12. Verwendung nach Anspruch 1, wobei das mindesten eine Polyamid in einer Menge von 2 bis 40 Gewichtsprozent vorliegt, das mindestens eine Polyolefin in einer Menge von 60 bis 97 Gewichtsprozent vorliegt und der mindestens eine alkylcarboxylsubstituierte polyolefinische Verträglichmacher in einer Menge von 0,25 bis 12 Gewichtsprozent vorliegt, wobei sich alle Gewichtsprozentsätze auf die Gesamtmenge an Polyamid, Polyolefin und alkylcarboxylsubstituiertem polyolefinischem Verträglichmacher beziehen.

13. Verwendung nach Anspruch 1, wobei der mindestens eine alkylcarboxylsubstituierte polyolefinische Verträglichmacher jeweils durch Aufpfropfen einer Dicarbonsäure oder eines Dicarbonsäurederivats wie eines Anhydrids, Esters oder Diesters auf ein Polyolefin hergestellt wird.

14. Verwendung nach Anspruch 1, **dadurch gekennzeichnet, dass** das Rohr oder der Liner ein flexibles Rohr ist.

15. Verwendung nach Anspruch 1, **dadurch gekennzeichnet, dass** das Rohr oder der Liner ein Leitungsrohr ist.

16. Verwendung nach Anspruch 1, **dadurch gekennzeichnet, dass** das Rohr oder der Liner ein Tieflochverrohrungsliner ist.

## Revendications

1. Utilisation, pour le transport du pétrole ou de gaz, de tubes et de liners comprenant un mélange obtenu en phase fondue:
(a) d'au moins une polyoléfine;
(b) d'au moins un polyamide incompatible avec la dite au moins une polyoléfine (a); et
(c) au moins un compatibilisant polyoléfinique substitué par un groupement alkylcarboxyle;
où lesdites polyoléfines (a) sont dans une phase matricielle continue et lesdits polyamides (b) sont présents dans une phase discontinue distribuée sous la forme d'une multitude de couches minces essentiellement parallèles et chevauchantes d'un matériau encastré dans la phase continue, et également où au moins une portion dudit compatibilisant (c) est présent entre les dites couches et favorise leur adhérence les unes aux autres.

2. Utilisation selon la revendication 1, où la dite au moins une polyoléfine est sélectionnée parmi le groupe consistant en un polyéthylène, un polypropylène, un polybutylène et des copolymères de ces matériaux.

3. Utilisation selon la revendication 1, où ledit au moins un compatibilisant polyoléfinique substitué par un groupement alkylcarboxyle est sélectionné parmi le groupe consistant en des polyoléfines auxquelles sont rattachés des fragments carboxyliques soit sur le squelette polyoléfinique lui-même, soit sur des chaînes latérales.

4. Utilisation selon la revendication 1, où ledit au moins un polyamide est sélectionné parmi le groupe consistant en un polycaproamide, un poly(11-aminoundécanoamide), un polydodécanoamide, un poly(sébacamide d'hexaméthylène), un poly(dodécanoamide d'hexaméthylène) et des copolymères de poly(adipamide d'hexaméthylène) et de polycaproamide.

5. Utilisation selon la revendication 1, où ledit au moins un polyamide comprend également des copolymères de polyamide amorphes dérivés en partie de monomères aromatiques.

6. Utilisation selon la revendication 1, où ladite phase discontinue distribuée est présente sous la forme de couches d'un matériau d'une épaisseur supérieure à 0,5 micromètres et inférieure à 50 micromètres.

7. Utilisation selon la revendication 1, où ledit mélange obtenu en phase fondue comprend également au moins un plastifiant.

8. Utilisation selon la revendication 1, où ledit mélange obtenu en phase fondue comprend également au moins un agent lubrifiant.

9. Utilisation selon la revendication 1, où ledit mélange obtenu en phase fondue comprend également au moins un stabilisant.

10. Utilisation selon la revendication 1, où chacun desdits au moins un polyamide a un point de fusion compris entre 150°C et 250 °C.

11. Utilisation selon la revendication 1, où chacun desdits au moins un polyamide a un point de fusion compris entre 180°C et 225 °C.

12. Utilisation selon la revendication 1, où ledit au moins un polyamide est présent à 2 à 40 pour cent en poids, ladite au moins une polyoléfine à 60 à 97 pour cent en poids et ledit au moins un compatibilisant polyoléfinique substitué par un groupement alkylcarboxyle à 0,25 à 12 pour cent en poids, tous les pourcentages en poids étant exprimés en fonction de la quantité totale de polyamide, polyoléfine et compatibilisant polyoléfinique substitué par un groupement alkylcarboxyle.

13. Utilisation selon la revendication 1, où chacun desdits au moins un compatibilisant polyoléfinique substitué par un groupement alkylcarboxyle est préparé par greffage, sur une polyoléfine, d'un acide dicarboxylique ou d'un dérivé d'un acide dicarboxylique comme un anhydride, ester ou diester.

14. Utilisation selon la revendication 1, **caractérisée en ce que** le tuyau ou liner est un tuyau souple.

15. Utilisation selon la revendication 1, **caractérisée en ce que** le tuyau ou liner est un tube de conduite.

16. Utilisation selon la revendication 1, **caractérisée en ce que** le tuyau ou liner est un liner de tubage pour puits profonds.
